# EUROPEAN PATENT SPECIFICATION

(11) **EP 4 684 407 B1**
(45) Date of publication and mention of the grant of the patent: **25.11.2026**
(21) Application number: 24713455.4
(22) Date of filing: 20.03.2024
(51) Int. Cl.: G21C 1/03, G21C 1/14, G21C 1/24, G21C 13/024

(54) **A REACTOR CONSTRUCTION**
REAKTORKONSTRUKTION
CONSTRUCTION DE RÉACTEUR

(30) Priority: 20.03.2023 DK PA202300248
(43) Date of publication of application: 28.01.2026
(73) Proprietor: Saltfoss Energy ApS, 2200 Copenhagen (DK)
(72) Inventor: WAGNER, Mads Kert, 2200 Copenhagen (DK)
(74) Representative: AWA Denmark A/S
(86) International application number: PCT/EP2024/057430
(87) International publication number: WO 2024/194345

(56) References cited:
- EP-A1- 0 617 430
- WO-A1-2022/017878
- US-A1- 2014 023 172
- US-A1- 2018 358 134
- SEO SEOK BIN ET AL: "Numerical analysis on spatial universality of similarity technique inside molten salt reactor system", INTERNATIONAL JOURNAL OF HEAT AND MASS TRANSFER, ELSEVIER, AMSTERDAM, NL, vol. 116, 21 September 2017 (2017-09-21), pages 569 - 580, XP085219111, ISSN: 0017-9310, DOI: 10.1016/J.IJHEATMASSTRANSFER.2017.09.036

## Description

### Field of the invention

The present invention relates to a reactor construction for housing a nuclear reactor and means for maintaining the reactor. The invention also relates to a method of maintenance for the reactor such as replacement of graphite elements inside the nuclear reactor vessel. The reactor construction and the method allow for the maintenance to be carried out with a minimum of radiation exposure to the electronic equipment necessary for the maintenance.

### Background of the Invention

Nuclear reactors provide heat evolved in the nuclear fission reaction and the heat is utilised typically by conventionally steam turbine generators to produce electricity to be used in for example households and industrial processes such as hydrogen production and desalination. The fission process takes place in the reactor core which comprises the nuclear fuel comprising the fissile isotope undergoing fission such as U-235, Pu-239 or other. The nuclear fuel has conventionally been a solid-state fuel such as the UOₓ (uranium oxides) in for example powder/pill shape and inserted into fuel rod tubes consisting of a metal alloy or ceramic. Other fuel types are being investigated and the molten salt reactor (MSR) using a molten salt comprising the dissolved fissile isotopes has been the subject of research and development for some decades with an increased activity since the original test at Oak Ridge National Laboratory (ORNL) in the 1950's and 1960's. Other materials besides the nuclear fuel are also present in the reactor core. For thermal nuclear reactors a moderator material is used to moderate the speed and thus the kinetic energy of the produced neutrons to energies where there is a much larger probability of the nuclear fission to take place for example for U-235. The moderator may be water (light water) like in the pressurised water reactor (PWR) of the boiling water reactor (BWR) or heavy water like in the Canadian deuterium uranium reactor (the CANDU-reactor). It may also be graphite structures such in the RBMK type reactors or in several of the various MSR reactors. The graphite moderator structure is a large bulky structure which is often compartmentalised for example in graphite columns. Graphite tiles may also be used for cladding the metal alloy reactor vessel.

Irrespective of the type of reactor, maintenance of the reactor core is required and part of the operation of the reactor. The solid fuel rods are typically replaced every 18-24 months. The graphite structure in the core degrades under the intense radiation and requires replacement after 2-10 years depending on the power density in the reactor core and this requires access to the highly radiative environment of the reactor core.

The document WO2022/017878 discloses a lifting device to be used for maintenance and refuelling for a reactor having a reactor pressure vessel (RPV) which is the case for PWR's and BWR's. The lifting device is capable of lifting the reactor vessel lid including the control rods (the integrated head assembly, IHP) to get access to the open reactor core. The lifting mechanism engages the underside of the closure head assembly and lifts the head assembly by pushing from the underside by means of a lifting element such as a lifting jack.

### Summary of the invention

It was an object of the present invention to provide a reactor construction that enable a wide variety of maintenance operations in an open reactor core.

A further object of the present invention was to provide a reactor construction with a lifting element for lifting a reactor vessel lid assembly, said lifting element avoiding the need for permanently installed electrical components in the reactor compartment.

A further object of the present invention was to provide a reactor construction that is particular suited for integration with a maritime structure.

In accordance with an aspect of the invention, there is provided a reactor construction comprising an upper compartment above a reactor compartment, said reactor compartment being separated from the upper compartment by a radiation shield,
wherein a molten salt reactor (MSR) is situated in the reactor compartment, the MSR comprising a reactor vessel with a reactor vessel lid assembly comprising:
   - a reactor vessel lid shield and a reactor vessel lid
wherein a lifting element is situated in the reactor construction, the lifting element comprising:
   - at least one bar being substantially vertical and axially adjustable along its longitudinal axis by a drive mechanism situated in the upper compartment, and
wherein at least one through-hole for the at least one bar is provided in the radiation shield and wherein the reactor vessel lid shield has at least one receiving structure configured to engage with and lock to the at least one bar.

In accordance with another aspect of the invention, there is provided a method of performing a maintenance operation in the reactor compartment according to any one of claims 1 to 12 comprising the steps of:
lifting the reactor vessel lid shield to provide a reactor vessel open from above by engaging with and locking at least one bar to the reactor vessel lid shield and engaging the drive mechanism of the bar;
deploying at least one trolley with hoist on at least one cross girder and at least one cross girder drive on the at least one cross girder, the at least one trolley with hoist, the cross girder drive and the at least one cross girder being comprised in a gantry crane, said at least one cross girder extending from a first wall of the reactor compartment to a second wall of the reactor compartment opposite the first wall, the at least one cross girder being mounted on gantry crane rails on the first wall and second wall, the deployment being performed by
opening a reactor compartment hatch, said reactor compartment hatch separating the upper compartment from the reactor compartment and lowering at least one trolley with hoist and at least one cross girder drive from the upper compartment through the open reactor compartment hatch and connecting the at least one trolley with hoist to the at least one cross girder;
positioning at least one trolley with hoist above the region subject to maintenance;
performing a maintenance procedure by lowering maintenance equipment in operational proximity of the region subject to maintenance.

In accordance with another aspect of the invention, there is provided a power barge comprising at least one reactor construction according to any one of claims 1 to 12 to generate heat evolved in a nuclear fission reaction and at least one steam turbine generator to produce electricity utilising said generated heat.

### Detailed Description

The reactor construction comprises an upper compartment above a reactor compartment, said reactor compartment being separated from the upper compartment by a radiation shield,
wherein a molten salt reactor (MSR) is situated in the reactor compartment, the MSR comprising a reactor vessel with a reactor vessel lid assembly comprising:
   - a reactor vessel lid shield and a reactor vessel lid
wherein a lifting element is situated in the reactor construction, the lifting element comprising:
   - at least one bar being substantially vertical and axially adjustable along its longitudinal axis by a drive mechanism situated in the upper compartment, and
   wherein at least one through-hole for the at least one bar is provided in the radiation shield and wherein the reactor vessel lid shield has at least one receiving structure configured to engage with and lock to the at least one bar.

The method of performing a maintenance operation comprises the steps of:
lifting the reactor vessel lid shield to provide a reactor vessel open from above by engaging with and locking at least one bar to the reactor vessel lid shield and engaging the drive mechanism of the bar;
deploying at least one trolley with hoist on at least one cross girder and at least one cross girder drive on the at least one cross girder, the at least one trolley with hoist, the cross girder drive and the at least one cross girder being comprised in a gantry crane, said at least one cross girder extending from a first wall of the reactor compartment to a second wall of the reactor compartment opposite the first wall, the at least one cross girder being mounted on gantry crane rails on the first wall and second wall, the deployment being performed by
opening a reactor compartment hatch, said reactor compartment hatch separating the upper compartment from the reactor compartment and lowering at least one trolley with hoist and the at least one cross girder drive from the upper compartment through the open reactor compartment hatch and connecting the at least one trolley with hoist and the at least one cross girder drive to the at least one cross girder;
positioning at least one trolley with hoist above the region subject to maintenance;
performing a maintenance procedure by lowering maintenance equipment in operational proximity of the region subject to maintenance.

The power barge comprises at least one reactor construction according to any one of claims 1 to 12 to generate heat evolved in a nuclear fission reaction and at least one steam turbine generator to produce electricity utilising said generated heat.

We find that a reactor construction and a method of performing a maintenance operation according to the invention has numerous advantages. The at least one bar is a mechanical component with no electrical components and can be utilised in the high radiation in the reactor compartment under a maintenance operation without deteriorating its function as part of the lifting element. The bar is controlled by a drive mechanism outside the reactor compartment and inside the upper chamber being protected by the radiation shield. Also, the engagement and locking of the bar with the reactor lid shield is without the use of electronic equipment but by way of example by forwarding the end of a threaded bar into a thread in the lid shield and thereby locking the threaded bar with the lid similar to a nut and bolt arrangement.

After the lifting element has lifted the lid and provided an open reactor core for the maintenance operation, the more sensible equipment is introduced into the reactor chamber thus limiting the received radiation dose by not having the equipment such as a gantry crane permanently installed in the reactor chamber.

The equipment such as the radiation sensitive parts of the gantry crane can be introduced via an airlock from the outside environment to the reactor chamber and through a sealable hatch of small dimension between the upper chamber and the reaction chamber which also minimizes the radiation dose in the upper chamber during the deployment of parts of the gantry crane.

### The reactor construction

In one embodiment, the reactor construction comprises an upper compartment above a reactor compartment, said reactor compartment being separated from the upper compartment by a radiation shield,
wherein a molten salt reactor (MSR) is situated in the reactor compartment, the MSR comprising a reactor vessel with a reactor vessel lid assembly comprising:
   - a reactor vessel lid shield and a reactor vessel lid
wherein a lifting element is situated in the reactor construction, the lifting element comprising:
   - at least one bar being substantially vertical and axially adjustable along its longitudinal axis by a drive mechanism situated in the upper compartment, and
   wherein at least one through-hole for the at least one bar is provided in the radiation shield and wherein the reactor vessel lid shield has at least one receiving structure configured to engage with and lock to the at least one bar.

Molten salt reactors (MSRs) are based on obtaining criticality with a fissile material most often dissolved in a molten salt and conventionally comprised in a reactor vessel where the reactor core is also situated. When the MSR uses a fissile material dissolved in a molten salt, the salt is referred to as the fuel salt (or molten fuel salt). Another type of reactor also referred to as an MSR is the case where the fuel is a solid and a molten salt is used as a coolant salt for accommodating the temperature increase in the solid pebble fuel, most often a TRISO type fuel. The US8442182 describes such a reactor where a molten salt is used as coolant for a pebble fuel immersed in the coolant.

In one embodiment, the fuel salt is a fluoride fuel salt or chloride fuel salt.

The reactor vessel comprises a reactor vessel lid assembly for closing and preferably sealing off an upper opening of the reactor vessel. The assembly may comprise reactivity control means, such as one or more control rods.

The reactor vessel lid assembly may also comprise a heat exchanger system or part of the heat exchanger system. The heat exchanger system may comprise the primary heat exchangers which transfer the heat from the fission process in the molten salt in the core to a secondary coolant salt, whereafter the heat in the secondary coolant salt is transferred to a medium that powers a turbine system. Such a medium is typically steam and the turbine system can be used to power a generator to produce electricity. Other media may be CO₂ or helium. The part of the heat exchanger system in the reactor vessel lid assembly may be the part that transfer the heat from the fission process in the molten salt in the core to a secondary coolant salt and the coolant salt is led through conduits to outside the reactor vessel to the rest of the heat exchanger system.

In one embodiment, the reactor vessel lid assembly comprises an upper plenum, said upper plenum comprising a part of the heat exchanger system.

The reactor vessel lid shield has the primary function of shielding from radiation inside the reactor vessel, such as gamma-rays and the reactor vessel lid shield is attached to the reactor vessel lid. Both the reactor vessel lid shield and the reactor vessel lid may comprise alloys as constructional materials, such as stainless steel alloys or nickel based alloys.

The lifting element in the reactor construction has the function of lifting the reactor vessel lid assembly to expose the inside of the reactor vessel for a maintenance operation and for reinstalling the reactor vessel lid assembly back after the maintenance operation. Other functions of the lifting element may be done during the commissioning and the decommissioning phase of the MSR. The lifting element comprises at least one bar being substantially vertical and axially adjustable along its longitudinal axis by a drive mechanism situated in the upper compartment. The at least one bar is thus preferably in a vertical position in the reactor construction along the bar's longitudinal axis both during a lifting operation and when not in use for a lifting operation.

The at least one bar fits through a through-hole in the radiation shield so that the lifting operation can proceed by the bar moving substantially vertically through the through-hole. The bar fits tight with the through-hole so that the through-hole is substantially leak-tight but the bar still being capable of moving with the use of the drive mechanism situated in the upper compartment. The tight fit may be provided by the use of steel O-rings or a similar lining of the through-hole.

In one embodiment, the lifting element comprises two bars.

In one embodiment, the lifting element comprises three bars.

In one embodiment, the lifting element comprises four bars.

In one embodiment, the lifting element comprises five bars.

In one embodiment, the lifting element comprises six bars.

In order to lift the reactor vessel lid assembly, the outer surface of the reactor vessel lid shield has at least one receiving structure configured to engage with and lock to the at least one bar. After the bar has locked with the reactor vessel lid assembly, the operation of lifting the reactor vessel lid assembly is ready to begin. The reactor vessel lid assembly may fit tight to the underlying reactor vessel shield edge by virtue of the substantial weight of the reactor vessel lid assembly and the reactor vessel lid assembly may have a profile that locks with a matching profile of the reactor vessel shield edge.

In one embodiment, the bar is a threaded bar, and a first end of the threaded bar is capable of engaging with a thread of the drive mechanism in the upper compartment and a second end of the bar is capable of engaging with and locking the threaded bar with a thread of the receiving structure of the reactor vessel lid shield.

When the threaded bar engages and locks with the thread in the reactor vessel lid shield it is understood to be a complimentary thread to the thread of the threaded bar in the way that the thread of a bolt in a bolt/nut-pair fits with the thread in the nut.

The use of a threaded interface between the bar and the reactor vessel lid shield has the advantage of a precise fitting with a high strength to withstand the gravitational forces when lifting the reactor vessel lid assembly comprising the reactor vessel lid shield and other heavy parts of the reactor vessel lid assembly.

The threaded bar may engage and lock with the thread of the receiving structure of the reactor vessel lid shield in the following way. The threaded bar is lowered towards the thread of the receiving structure by rotating a thread of the drive mechanism using the drive mechanism in the upper compartment, said thread of the drive mechanism being engaged with the threaded bar. When the thread of the drive mechanism is engaged with the threaded bar as above, the thread for example being part of a nut structure is surrounding and fitting with the thread of the threaded bar, the bar being the bolt-part in a nut/bolt-pair. The effect of rotating the thread of the drive mechanism is that the threaded bar moves along its longitudinal axis in a translational movement but without rotating. When the threaded bar has reached the thread of the receiving structure the threaded bar must rotate into the thread of the receiving structure so as to lock into the thread of the receiving structure. The rotation may be done for example by rotation of the bar itself in the drive mechanism by conventional means. Alternatively, the rotation may be done by locking the thread of the drive mechanism in position with the threaded bar and continue the rotation of the thread of the drive mechanism in this locked relation so that the threaded bar rotates.

In one embodiment, the lifting element is selected from the group of a rack and pinion, a lifting jack, a ram/piston, a telescoping linear actuator, a rigid chain actuator.

When choosing a rack and pinion as the lifting element, the bar has the function of the rack, and when choosing a lifting jack as the lifting element, the bar has the function of a cylinder and when choosing a ram/piston as the lifting element, the bar has the function of piston rod. Irrespective of the selected lifting element, the bar can engage and lock to the reactor vessel lid shield.

In one embodiment, the bar comprises a foldable fork lift.

A foldable fork lift is preferably forming part of the one end of the bar that shall engage and lock with the reactor vessel lid shield. Upon lowering the bar with the closed fork into a receiving structure of the reactor vessel lid shield, the closed fork lift opens and the fork locks with the receiving structure.

In one embodiment, the reactor construction comprises an airlock in the upper compartment, wherein the airlock comprises an upper compartment hatch separating the upper compartment from the outside environment and at least one reactor compartment hatch separating the upper compartment from the reactor compartment.

In one embodiment, the at least one reactor compartment hatch has a size where the minimum dimension is less than 1,5 m, such as less than 1 m, such as less than 0,5 m. It is preferred to have more reactor compartment hatches, such as two hatches so that one hatch is placed above one location of the storage region and the other hatch is placed above another location of the storage region. One hatch may for example be used for lowering equipment for the gantry crane and one hatch may be used lowering a camera into the reactor compartment to guide the equipment in place.

The bulkiest parts of the equipment for doing maintenance is already situated in the reactor compartment and it is only equipment like the trolley with hoist and attachable gripping tools and other that needs to be introduced from the upper compartment into the reactor compartment. Other items that needs to be introduced through the hatch is graphite moderator structures, for example graphite moderator columns and fuel tubes, both items having a small minimum dimension. It is therefore possible for the reactor construction according to this embodiment to have a relatively small minimum dimension of the reactor compartment hatch, being an advantage since the regions surrounding hatch opening regions are in general representing a safety risk.

In one embodiment, the reactor construction comprises a storage region inside the reactor compartment for used graphite moderator, used graphite shielding and used fuel tubes.

A storage region for irradiated material is advantageously situated in the reactor compartment where it is shielded from the surroundings by the shielding walls and the radiation shield dividing the reactor compartment from the upper compartment. Other items to be stored may be the equipment and the tools that are used during the maintenance operation in case the equipment and tools have acquired a radiation dose that requires storage for a later decommissioning process for example together with the nuclear reactor.

In one embodiment, the reactor construction comprises, in the reactor compartment: a gantry crane comprising at least one cross girder, a cross girder drive and a trolley with hoist, said at least one cross girder extending from a first wall of the reactor compartment to a second wall of the reactor compartment opposite the first wall, the at least one cross girder being mounted on gantry crane rails on the first wall and second wall.

A conventional gantry crane is preferred for the operations in the reactor vessel. The relatively narrow reactor compartment is utilised so that the thick inner walls of the reactor compartment provide a strong support for the one or more cross girders of the gantry crane, preferably by gantry crane rails as being part of the wall structure either into or on the surface of the reactor compartment walls. The cross girder drive may also conventionally be referred to as a bridge drive. The trolley with hoist comprises both a drive for the hoist and a drive for the trolley.

In one embodiment, the reactor construction comprises, in the reactor compartment: a gantry crane comprising one cross girder, a cross girder drive and a trolley with hoist, said cross girder extending from a first wall of the reactor compartment to a second wall of the reactor compartment opposite the first wall and mounted on gantry crane rails on the first wall and second wall.

When the gantry crane comprises one cross girder, the trolley with hoist can be mounted on the underside of the cross girder, preferably where the cross girder has an I-beam profile and the trolley has a profile that locks to the lower part of the I shape. Preferably, the trolley with hoist is mounted on the upper side of the cross girder.

In one embodiment, the reactor construction comprises, in the reactor compartment: a gantry crane comprising two cross girders, a cross girder drive and a trolley with hoist, said cross girders extending from a first wall of the reactor compartment to a second wall of the reactor compartment opposite the first wall, and the two cross girders being mounted on gantry crane rails on the first wall and second wall.

By using two cross girders it possible to increase the lifting capability when compared to a gantry crane with one cross girder and this is preferred for large reactor vessel lid assemblies. The trolley with hoist is supported by both cross girders, preferably in between two cross girders having I-beam profiles so that the trolley is supported by the lower part of the I-beam profile, whereupon the trolley is moving.

The reactor vessel lid assembly may comprise reactivity control means, such as one or more control rods. The reactivity control means comprises a control rod drive mechanism in the upper compartment. The drive rods of the drive mechanism pass through the vessel lid shield and are connected to control rods contained within the reactor core thus enabling to absorb neutron radiation within the core for controlling the fission reaction. The drive rods within the control rod drive mechanism can raise and lower the control rods within the reactor core.

In one embodiment, the reactor vessel lid assembly comprises a reactivity control means, and the reactivity control means comprises at least one control rod being axially adjustable along the longitudinal axis of the at least one control rod, and connected via at least one drive rod to a control rod drive mechanism situated in the upper compartment, where the mechanism is fastened to a separate section of the radiation shield, said section fastened with a vertical spacer structure to the upper side of the reactor vessel lid shield.

One advantage of the above embodiment is that the drive rods is kept engaged with the control rod drive mechanism throughout the whole lifting procedure of the lifting the reactor vessel lid. Thus, it is not needed to have a separate procedure for detaching the drive rod from the drive before lifting the lid up and reattaching the drive rod to the drive after the reactor lid has been lowered back into place on the reactor vessel.

In one embodiment, the vertical spacer structure is a closed structure enclosing at least a part of the reactivity control means.

When the reactor vessel lid assembly is lifted to its upper position with the reactivity control means, these control means will be situated in the upper compartment and to decrease the radiation in the upper compartment, a vertical spacer structure being a closed structure is used to shield the reactivity control means.

In one embodiment, the vertical spacer structure is a lattice structure.

In one embodiment, the reactor vessel lid assembly is comprising a consolidated unit of
- the reactor vessel lid shield,
- the reactor vessel lid,
- an upper reactor plenum and
- the reactivity control means, such as a mechanically consolidated unit.

It is an advantage for the maintenance operation if the reactor vessel lid assembly is a consolidated unit so that the whole reactor vessel lid assembly can be lifted in one lifting operation. Various parts of the reactor vessel lid assembly may have to be disconnected before the lifting operation for example in the case of a heat exchanger in the upper plenum being connected to piping and a second heat exchanger outside the reactor vessel or outside the reactor compartment. After disconnection, the whole reactor vessel lid assembly may be lifted.

In one embodiment, the reactor vessel lid shield and the reactor vessel lid is a consolidated unit, such as the reactor vessel lid is constituted by the underside of the reactor vessel lid shield.

In one embodiment, the reactor construction is sealed against the outside environment.

The arrangement of the elements inside the reactor construction are so that the elements are all in relatively close proximity of each other, for example the reactor vessel being next to the storage region having the effect that the reactor construction has a relatively small surface area towards the outside environment. The radiation shield between the reactor compartment and the upper compartment also has the effect that these two elements can lie close to each other. The relatively compact structure of the reactor construction enables are more cost-effective structure to seal against the outside environment.

In one embodiment, the reactor construction comprises a drain tank for storing molten salt.

The drain tank may be used for storing the salt before the operation of the reactor commences or as a safety system using a salt plug as described in the prior art that will melt and the molten fuel salt comprising the fissile material will drain into the drain tank for the nuclear reaction to come to a halt and for the molten salt to cool down.

In one embodiment, a maritime structure, preferably a power barge comprises at least one reactor construction to generate heat evolved in a nuclear fission reaction and at least one steam turbine generator to produce electricity utilising said generated heat.

The reactor construction is particularly suited to be part of a maritime construction such as a barge where the demand for minimizing space is of importance. The arrangement of the elements inside the reactor construction are so that the elements are all in relatively close proximity of each other, for example the reactor vessel being next to the storage region. The radiation shield between the reactor compartment and the upper compartment also has the effect that these two elements can lie close to each other. The upper compartment may function as a dry region on board the maritime structure, such as the barge.

In one embodiment, the radiation shield separating the upper compartment from the reactor compartment is a part of the bulkhead of the maritime structure, such as a barge.

The integration of the reactor construction with the maritime structure, preferably a barge can advantageously be done by letting the radiation shield separating the upper compartment from the reactor compartment form part of the bulkhead of the maritime construction, thus utilizing the radiation shield in two ways: both as the radiation shield and as the bulkhead of the maritime structure thereby saving space. When the radiation shield is a part of the bulkhead of the barge, the bulkhead may extend substantially from one end of the barge side to the other side covering substantially the whole width of the barge and preferably being 3 to 10 meters, such as 5 to 8 meters above sea level. The part of the bulkhead described above that also functions as the radiation shield may be a part around midway on a line across the width of the barge or two reactor constructions may lie side by side along said line and both utilise the bulkhead as the radiation shield.

In one embodiment, there is provided a method of performing a maintenance operation in the reactor compartment according to any one of claims 1 to 12 comprising the steps of:
lifting the reactor vessel lid shield to provide a reactor vessel open from above by engaging with and locking at least one bar to the reactor vessel lid and engaging the drive mechanism of the bar;
deploying at least one trolley with hoist on at least one cross girder and at least one cross girder drive on the at least one cross girder, the at least one trolley with hoist, the cross girder drive and the at least one cross girder being comprised in a gantry crane, said at least one cross girder extending from a first wall of the reactor compartment to a second wall of the reactor compartment opposite the first wall, the at least one cross girder being mounted on gantry crane rails on the first wall and second wall, the deployment being performed by
opening a reactor compartment hatch, said reactor compartment hatch separating the upper compartment from the reactor compartment and lowering at least one trolley with hoist and the at least one cross girder drive from the upper compartment through the open reactor compartment hatch and connecting the at least one trolley with hoist and the at least one cross girder drive to the at least one cross girder;
positioning at least one trolley with hoist above the region subject to maintenance;
performing a maintenance procedure by lowering maintenance equipment in operational proximity of the region subject to maintenance.

During the beginning of the maintenance operation the lifting element lifts the reactor vessel lid assembly from the reactor vessel vertically upwards sufficiently high to allow for gantry crane to perform the maintenance without colliding with the lifted reactor vessel lid assembly. Thus, the reactor vessel lid assembly should be lifted at least above the gantry crane rails, such as at least having the underside of the reactor vessel lid assembly being at least 1 meter or at least 3 meter above the gantry crane rails. The reactor vessel lid assembly may also be lifted upwards until it contacts the underside of the radiation shield. The reactor is preferably shut down or the nuclear fission reaction has been stopped by known means depending on the specific design of the MSR that are required by the operating license of the MSR. After the reactor vessel lid has been removed, the radiation intensity is preferably allowed to wear off before performing the rest of the steps of the maintenance operation.

The opening of the reactor compartment hatch may be performed by a motor drive and controlled from the upper compartment.

The deployment of the at least one trolley with hoist onto the at least one cross girder may be guided with the aid of a camera inside the upper compartment having a view through the open reactor compartment hatch or the camera being lowered inside the reactor compartment. Likewise, the deployment of the cross girder drive may be guided as described here above with the aid of a camera. The above equipment, for example the trolley hoist may be attached to one end of a wire and the other end of the wire being connected to a lifting mechanism such as a crane in the upper compartment whereafter the equipment is lowered through the open reactor compartment hatch.

After the trolley with hoist and the cross girder drive has been deployed, the gantry crane is ready for performing a maintenance operation. The operation may require various maintenance equipment, for example a gripper tool for a fuel rod. One example from the prior art of a gripper can be seen in US4903281. Other equipment may be cameras or radiation measuring devices used in periods of time during the maintenance to ensure a proper maintenance.

In one embodiment, the maintenance operation is performed in the upper plenum.

In one embodiment, the MSR comprises at least one graphite moderator structure and the maintenance operation is a replacement of the at least one graphite moderator structure in the MSR.

The replacement of a graphite moderator structure is carried out by positioning the trolley with hoist above the graphite moderator structure and using a gripper tool and lower the gripper tool to grab a used graphite moderator structure. The used graphite moderator structure is thereafter transported with the trolley with hoist to the storage region and lowered into the storage region for storage and the release mechanism of the gripper tool effected. The trolley with hoist may thereafter be parked at a spot so that an introduction of a fresh graphite moderator structure through the open reactor compartment hatch can take place without collision with the gantry crane. After the fresh graphite moderator structure has been placed in position in the reactor compartment, the trolley with hoist is positioned to engage and grip the fresh graphite moderator structure with the gripper and transport it above the reactor and lower it into the position in the reactor where it is needed. The replacement as described here can be guided via cameras introduced into the reactor compartment.

In one embodiment, the replacement is carried out of several graphite moderator structures in one maintenance procedure, such as replacement of all graphite moderator structures in one maintenance procedure.

The several or all graphite moderator structures may be consolidated mechanically as into one structure and this consolidation is preferably done at the outset when constructing the reactor core before the fission reaction has been initiated. The demands for lifting capacity for this embodiment are high and it is preferred to use a gantry crane comprising at least two cross girders.

In one embodiment, the MSR comprises at least one fuel salt tube, said at least one fuel salt tube preferably being made of graphite and the maintenance operation is a replacement of the at least one fuel salt tube.

The fuel salt tubes may be made of an alloy, such as a Zr-, Ni- or Mo-based alloy or made of silicon carbide or graphite and the salt fuel tubes enclosing the fuel salt comprising the fissile material.

In one embodiment, there is provided a reactor construction comprising an upper compartment above a reactor compartment, said reactor compartment being separated from the upper compartment by a radiation shield,
wherein a pressurised water reactor (PWR) or a boiling water reactor (BWR) is situated in the reactor compartment, the PWR or BWR comprising a reactor vessel with a reactor vessel lid assembly comprising:
   - a reactor vessel lid shield and a reactor vessel lid
wherein a lifting element is situated in the reactor construction, the lifting element comprising:
   - at least one bar being substantially vertical and axially adjustable along its longitudinal axis by a drive mechanism situated in the upper compartment, and
   wherein at least one through-hole for the at least one bar is provided in the radiation shield and wherein the reactor vessel lid shield has at least one receiving structure configured to engage with and lock to the at least one bar, preferably said bar is a threaded bar, and a first end of the threaded bar is capable of engaging with a thread of the drive mechanism in the upper compartment and a second end of the bar is capable of engaging with and locking the threaded bar with a thread of the receiving structure of the reactor vessel lid shield.

All of the features of any one of claims 3 to 10 are applicable to the above embodiment for a PWR or a BWR.

In one embodiment, there is provided a method of performing a maintenance operation in the reactor compartment according to the above embodiments for a PWR or a BWR, comprising the steps of:
lifting the reactor vessel lid shield to provide a reactor vessel open from above by engaging with and locking at least one bar to the reactor vessel lid and engaging the drive mechanism of the bar;
deploying at least one trolley with hoist on at least one cross girder and at least one cross girder drive on the at least one cross girder, the at least one trolley with hoist, the cross girder drive and the at least one cross girder being comprised in a gantry crane, said at least one cross girder extending from a first wall of the reactor compartment to a second wall of the reactor compartment opposite the first wall, the at least one cross girder being mounted on gantry crane rails on the first wall and second wall, the deployment being performed by
opening a reactor compartment hatch, said reactor compartment hatch separating the upper compartment from the reactor compartment and lowering at least one trolley with hoist and the at least one cross girder drive from the upper compartment through the open reactor compartment hatch and connecting the at least one trolley with hoist and the at least one cross girder drive to the at least one cross girder;
positioning at least one trolley with hoist above the region subject to maintenance;
performing a maintenance procedure by lowering maintenance equipment in operational proximity of the region subject to maintenance.

In one embodiment, the method according to the above embodiment is a replacement of spent fuel rods with fresh fuel rods in the PWR or BWR.

### Brief description of the drawings

In the following the invention will be explained in greater detail with the aid of examples and with reference to the schematic drawings, in which
Figure 1 shows a reactor construction from the front with the reactor vessel lid in place,
Figure 2 shows a reactor construction from the front with the reactor vessel lid lifted and a gantry crane,
Figure 3 shows a reactor construction from the side with the reactor vessel lid lifted, a gantry crane and a storage region,
Figure 4 shows a reactor construction, top view with the reactor vessel lid lifted and a gantry crane,
Figure 5 shows a reactor construction from the front with the reactor vessel lid in place,
Figure 6 shows a reactor construction from the front with the reactor vessel lid lifted and a gantry crane,

### Reference signs list

1 A reactor construction
2 an upper compartment
3 a reactor compartment
4 a radiation shield
5 a molten salt reactor (MSR)
6 a reactor vessel
7 a reactor vessel lid assembly
8 a reactor vessel lid shield
9 a reactor vessel lid
10 an upper reactor plenum
11 a reactivity control means
12 a lifting element
13 a bar
14 a drive mechanism
15 a through-hole for a bar
16 a receiving structure
17 a threaded bar
18 a first end of the bar
19 a thread of the drive mechanism
20 a second end of the bar
21 a thread of the receiving structure
22 an airlock in the upper compartment
23 an upper compartment hatch
24 a reactor compartment hatch
25 a storage region
26 a gantry crane
27 a cross girder
28 a trolley with hoist
29 gantry crane rails
30 a first wall
31 a second wall
32 control rod
33 a drive rod
34 a control rod drive mechanism
35 a separate section of the radiation shield
36 a vertical spacer structure
37 a drain tank
38 a graphite moderator structure
39 a fuel salt tube

The invention is not limited to the embodiment/s illustrated in the drawings. Accordingly, it should be understood that where features mentioned in the appended claims are followed by reference signs, such signs are included solely for the purpose of enhancing the intelligibility of the claims and are in no way limiting on the scope of the claims.

The term "comprising" as used in this specification and claims means "consisting at least in part of". When interpreting statements in this specification and claims which include the term "comprising", other features besides the features prefaced by this term in each statement can also be present. Related terms such as "comprise" and "comprised" are to be interpreted in a similar manner.

### Detailed Description

The present invention will now be illustrated with reference to the accompanying drawings and in the following non-limiting examples.

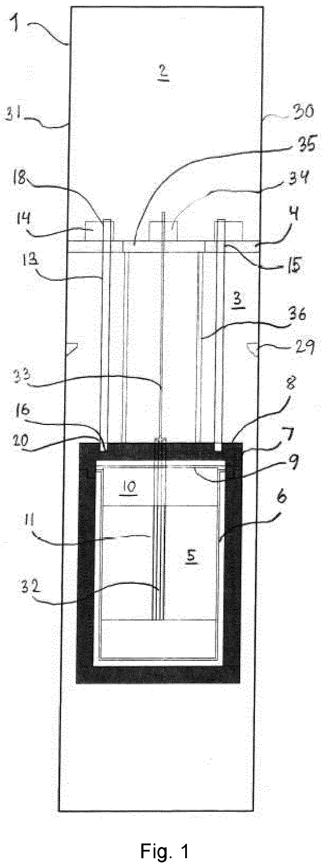

A reactor construction 1 of the invention is shown in Figure 1 as a section along A-A showing a front section of the reactor construction 1. In Figure 1, the reactor lid is in-place. Figure 1 shows the reactor construction 1, which has an upper compartment 2 above a reactor compartment 3, the compartments 2,3 being separated by the radiation shield 4. Two bars 13 being part of the lifting element are shown each having a first end 18 engaged with a drive mechanism 14 situated on the floor of the radiation shield 4 in the upper compartment 2. There are four bars 13 altogether but only two bars 13 are visible in figure 1. The bars 13 are each penetrating a through-hole 15 in the radiation shield 4 so that they are capable of moving along their longitudinal axes and the through-hole 15 being a leak-tight closure between the upper compartment 2 and the reactor compartment 3. The second end 20 of each of the bars 13 is shown as engaged and locked with the reactor vessel lid shield 8 in the reactor compartment 3. The lifting element is thus shown in its retracted position in figure 1 where the reactor vessel lid shield 8 is covering and sealing the reactor vessel 6 in the reactor compartment 3. Each bar 13 may be a threaded bar 17 and the threaded bar 17 has engaged and locked with the lid shield 8 to this retracted position by the bar 13 being lowered with the drive mechanism 14 along its longitudinal axis so that the second end 20 (the lower end) of the threaded bar 17 engaged and fitted with a thread 21 of the receiving structure of the lid shield 8. The second end of the bar 20 was thereafter further lowered into the thread 21 of the receiving structure, and the bar 13 locked with the thread 21 of the receiving structure.

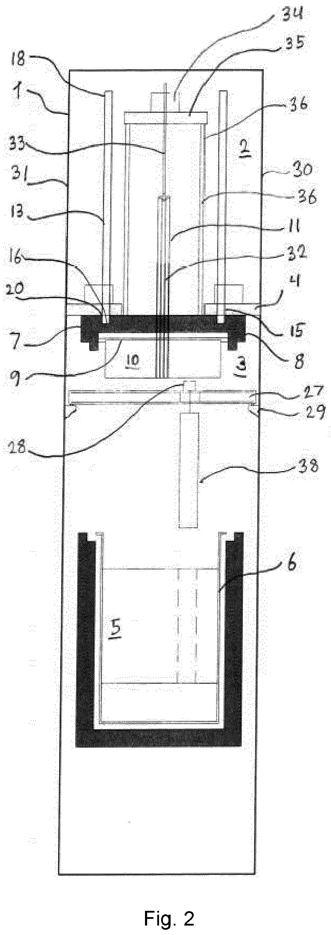

From the retracted position of the lifting mechanism shown in figure 1, the reactor vessel lid assembly 7 is lifted vertically and thereby protracted by the lifting mechanism to a higher position in the reactor compartment 3 shown in figure 2. The lifting of the reactor vessel lid assembly 7 is carried out by engaging the first end 18 (the upper end) of the threaded bar 17 with the drive mechanism 14 for example engaging the thread of the bar with a thread of the drive mechanism 14 and rotating the thread 19 comprised in the drive mechanism 14 to move the bar 13 along its longitudinal axis.

The reactor vessel lid assembly 7 including the upper reactor plenum 10 is shown lifted up to and in contact with the lower side of the radiation shield 4. The reactor vessel lid shield 8 thereby provides a sealing between the upper compartment 2 and the reactor compartment 3. Furthermore, there is shown several control rods 32 in a cluster connected via a drive rod 33 to a control rod drive mechanism 34 situated in the upper compartment 2. Several clusters each having several control rods 32 and their own drive rod 33 and control rod drive mechanism 34 would normally be present but only one such cluster or rods 32 and accompanying drive rod 33 and drive mechanism 34 is shown. The control rod drive mechanism 34 is fixed to a separate section 35 of the radiation shield 4. This separate section 35 is capable of being lifted together with the reactor vessel lid assembly 7 using the lifting element. A vertical spacer structure 36 is shown that connects the separate section 35 with the reactor vessel lid shield 8 thereby consolidating the separate section 35 and the vessel lid shield 8 into one unit that can be moved. Upon lifting the reactor vessel lid assembly 7, the separate section 35 follows along because it is connected to the lid assembly 7. The figure shows the separate section 35 of the radiation shield in a lifted position and the reactor vessel lid shield 8 forming the seal between the two compartments as explained above.

Figure 2 also shows a gantry crane 26 having a graphite moderator structure 38 supported by a wire from a trolley with hoist (not shown), said trolley being supported by a cross girder 27. In Figure 2, the reactor lid is lifted. The cross girder 27 is placed on two gantry crane rails 29, each fixed to walls 30, 31 opposite each other, said rails 29 enabling that the cross girder 27 can slide and be positioned so that the gantry crane 26 is in a proper position for performing the maintenance operation inside the open reactor vessel 6.

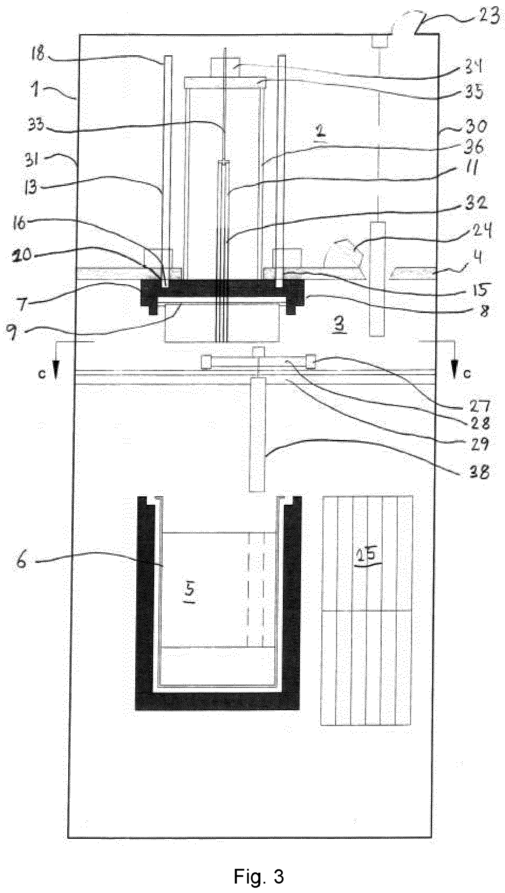

Figure 3 shows the reactor construction 1 of figure 2 as a section along B-B showing the reactor construction 1 from the side. In Figure 3, the reactor lid is lifted

In figure 3, it is seen that the storage region 25 inside the reactor compartment 3 is situated behind the reactor vessel 6 and capable of holding several used graphite columns (not shown) or fuel tubes (not shown). A fresh unused graphite column 38 is seen being lowered from the upper compartment 2 and entering the reactor compartment 3 through the reactor compartment hatch 24. Two of the four bars 17 are shown in figure 3, one bar 17 is also shown in figure 1 and another bar 17 is not shown in figure 1.

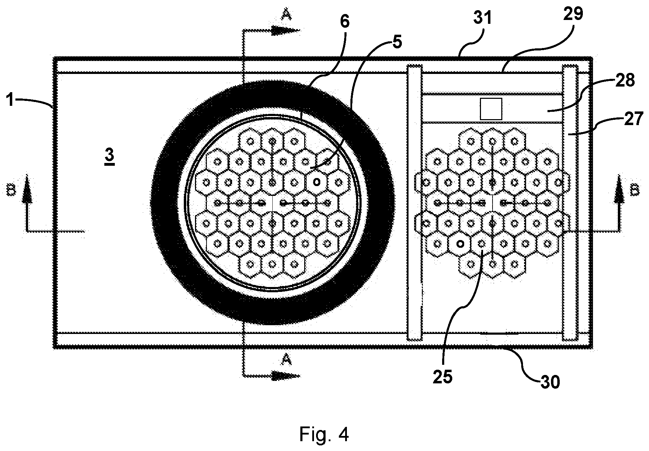

Figure 4 shows the reactor construction 1 as a plan section showing the open reactor vessel 6 with the vessel lid shield (not shown) removed and lifted up and above the illustrated section. Figure 2 shows a plan section C-C with the reactor lid lifted. The graphite columns 38 of the MSR 5 are seen from above having a hexagonal cross-section and arranged in a regular pattern inside the reactor vessel 6. A gantry crane 26 is seen parked over the replaced graphite columns in the storage region 25 next to the reactor vessel 6. The gantry crane 26 has two cross girders 27 with a trolley with hoist 28 between the two cross girders 27.

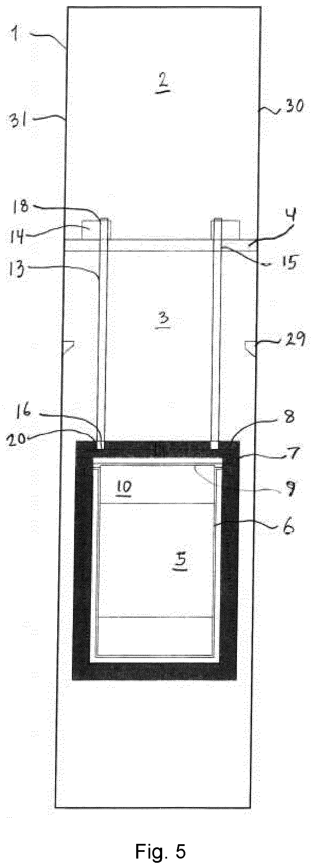

Another reactor construction 1 of the invention is shown in Figure 5 as a section along A-A showing a front section of the reactor construction 1. In Figure 5, the reactor lid is in-place. Figure 5 shows the reactor construction 1, which has an upper compartment 2 above a reactor compartment 3, the compartments 2,3 being separated by the radiation shield 4. Two bars 13 being part of the lifting element are shown each having a first end 18 engaged with a drive mechanism 14 situated on the floor of the radiation shield 4 in the upper compartment 2. The bars 13 are each penetrating a through-hole 15 in the radiation shield 4 so that they are capable of moving along their longitudinal axes and the through-hole 15 being a leak-tight closure between the upper compartment 2 and the reactor compartment 3. The second end 20 of each of the bars 13 is shown as engaged and locked with the reactor vessel lid shield 8 in the reactor compartment 3. The lifting element is thus shown in its retracted position in figure 5 where the lid shield 8 is covering and sealing the reactor vessel 6 in the reactor compartment 3. Each bar 13 may be a threaded bar 17 and the threaded bar 17 has engaged and locked with the lid shield 8 to this retracted position by the bar 13 being lowered with the drive mechanism 14 along its longitudinal axis so that the second end 20 (the lower end) of the threaded bar 17 engaged and fitted with a thread 21 of the receiving structure of the lid shield 8. The second end 20 of the bar 17 was thereafter further lowered into the thread of the receiving structure 21, and the bar 17 locked with the thread 21 of the receiving structure.

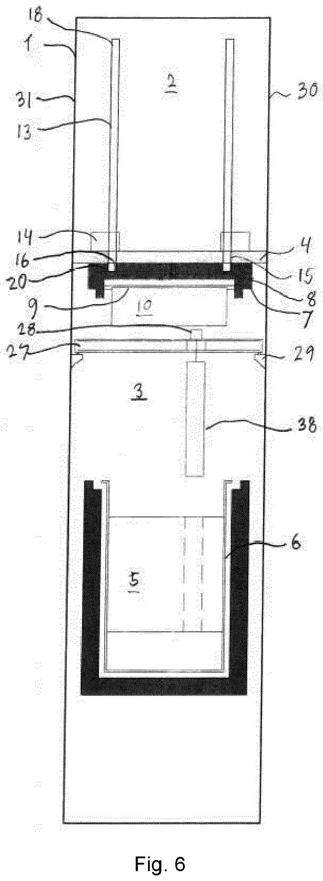

From the retracted position of the lifting mechanism shown in figure 5, the reactor vessel lid assembly 7 is lifted vertically and thereby protracted by the lifting mechanism to a higher position in the reactor compartment 3 shown in figure 6. In Figure 6, the reactor lid is lifted. The lifting of the reactor vessel lid assembly 7 is carried out by engaging the first end 18 (the upper end) of the threaded bar 17 with the drive mechanism 14 for example engaging the thread of the bar 17 with a thread of the drive mechanism 14 and rotating the thread comprised in the drive mechanism 14 to move the bar along its longitudinal axis.

The reactor vessel lid assembly 7 including the upper reactor plenum 10 is shown lifted up to and in contact with the lower side of the radiation shield 4. This illustrated example of a reactor construction has control rods (not shown) that can be positioned into the reactor core by a drive mechanism providing horizontal insertion from the side of the reactor vessel.

Figure 6 also shows a gantry crane 26 having a graphite moderator structure supported by a wire from a trolley with hoist (not shown), said trolley being supported by a cross girder 27. The cross girder 27 is placed on two gantry crane rails 29, each fixed to walls 30, 31 opposite each other, said rails 29 enabling that the cross girder 27 can slide and be positioned so that the gantry crane 26 is in a proper position for performing the maintenance operation inside the open reactor vessel 6.

### Example 1

The replacement of a graphite moderator structure may be done as in the following example.

After a predetermined period of operation, a columnar graphite moderator with a hexagonal cross-section needs replacement. The reactor is shut down by inserting control rods from the side into the reactor core to halt the nuclear fission reaction and the fuel salt circulation is stopped. The fuel salt is drained into the drain tank situated below the core and the off-gas system in the upper plenum is shut down. Three bars, all being threaded bars are each moved along their respective longitudinal axes with each their drive mechanisms being located in the upper compartment of the reactor construction. For each of the threaded bars, the lower end of the threaded bar inserts into a matching thread in the receiving structure of the reactor vessel lid shield and the threaded bar rotates into the thread to lock the threaded bar with the thread of the receiving structure. Thereafter, the threaded bars are now moved upwards along their longitudinal axes synchronised so as to perform a lifting movement of the reactor vessel lid assembly comprising a consolidated unit of a reactor vessel lid shield, a reactor vessel lid and an upper plenum. The reactor vessel lid assembly is moved up so that the upper side of the reactor vessel lid shield touches the underside of the radiation shield, said radiation shield separating the upper compartment from the reactor compartment.

The assembly of the gantry crane is hereafter done following a period of time to allow for the radiation level to lower. A first reactor compartment hatch is opened by a motor drive in the upper compartment and a trolley with hoist is lowered through the open hatch until it reaches two cross girders spaced apart and the trolley with hoist is now placed and connected to the upper side of the two cross girders. A cross girder drive (a bridge drive) is lowered through a second open reactor compartment hatch and positioned and connected to the cross-girders and this deployment is guided with the aid of a camera lowered into the reactor compartment through the first open reactor compartment hatch.

After the trolley with hoist and the cross girder drive has been deployed, the gantry crane is placed above and grabs a single graphite column from the top with a gripper, raises the graphite column with the hoist and translates it with the aid of the bridge drive so the trolley is now placed above the storage region. The graphite column is thereafter lowered into a vacant site for storage and released.

A fresh, unused graphite column is lowered through the open second hatch and placed so that the gripper can grab the column in an upper end and the gantry crane positions the unused graphite column in the vacant spot in the reactor. In a variant of a method of replacing the graphite columns, the removal of all the used graphite columns that are to be replaced are carried out before the unused graphite columns are introduced and inserted in the reactor core.

### Example 2

A power barge has two reactor constructions side by side in the mid-section of the barge. The two reactor constructions are separated from each other and can be operated independently of each other but sharing the side wall that divides the two reactor constructions. They also share the radiation shield separating the upper compartment from the reactor compartment in each of the reactor constructions. The radiation shield also forms part of the bulkhead of the barge.

The power barge produces electrical power and provides the power to facilities in land through cabling from the barge and the barge houses equipment to provide electricity such as heat exchangers and steam turbine generators using the heat from the nuclear reactors. Other facilities on board are the storage regions in the reactor construction which are sealed off by the radiation shield and further shielding surrounding the reactor vessels. The storage regions can hold graphite moderator structures, graphite lining, fuel tubes, radiated maintenance equipment and other high- and low-level waste for the whole duration of the barge's lifetime until decommissioning.

## Claims

1. A reactor construction (1) comprising an upper compartment (2) above a reactor compartment (3), said reactor compartment being separated from the upper compartment by a radiation shield (4),
wherein a molten salt reactor (MSR) (5) is situated in the reactor compartment (3), the MSR (5) comprising a reactor vessel (6) with a reactor vessel lid assembly (7) comprising:
- a reactor vessel lid shield (8) and a reactor vessel lid (9)
wherein a lifting element (12) is situated in the reactor construction (1), the lifting element (12) comprising:
- at least one bar (13) being substantially vertical and axially adjustable along its longitudinal axis by a drive mechanism (14) situated in the upper compartment (2), and
wherein at least one through-hole (15) for the at least one bar (13) is provided in the radiation shield (4) and wherein the reactor vessel lid shield (8) has at least one receiving structure (16) configured to engage with and lock to the at least one bar (13).

2. The reactor construction (1) according to any claim 1, wherein the bar (13) is a threaded bar (17), and a first end (18) of the threaded bar (17) is capable of engaging with a thread (19) of the drive mechanism in the upper compartment (2) and a second end (20) of the threaded bar (17) is capable of engaging with and locking the threaded bar (17) with a thread (21) of the receiving structure of the reactor vessel lid shield (8).

3. The reactor construction (1) according to claim 1, wherein the lifting element (12) is selected from the group of a rack and pinion, a lifting jack, a ram/piston, a telescoping linear actuator, a rigid chain actuator.

4. The reactor construction (1) according to claim 3, wherein the bar (13) comprises a foldable fork lift.

5. The reactor construction (1) according to any one of the above claims further comprising an airlock (22) in the upper compartment (2), wherein the airlock (22) comprises an upper compartment hatch (23) separating the upper compartment (2) from the outside environment and at least one reactor compartment hatch (24) separating the upper compartment (2) from the reactor compartment (3).

6. The reactor construction (1) according to any one of the above claims further comprising a storage region (25) inside the reactor compartment (3) for used graphite moderator, used graphite shielding and used fuel tubes.

7. The reactor construction (1) according to any one of the above claims further comprising, in the reactor compartment (3):
a gantry crane (26) comprising at least one cross girder (27), a cross girder drive and a trolley with hoist (28), said cross girder (27) extending from a first wall (30) of the reactor compartment (3) to a second wall (31) of the reactor compartment (3) opposite the first wall (30), the at least one cross girder (27) being mounted on gantry crane rails (29) on the first wall (30) and second wall (31).

8. The reactor construction (1) according to any one of the above claims, wherein the reactor vessel lid assembly (7) comprises a reactivity control means (11), and the reactivity control (11) means comprises at least one control rod (32) being axially adjustable along the longitudinal axis of the at least one control rod (32), and connected via at least one drive rod (33) to a control rod drive mechanism (34) situated in the upper compartment (2), where the mechanism (34) is fastened to a separate section (35) of the radiation shield (4), said section (35) fastened with a vertical spacer structure (36) to the upper side of the reactor vessel lid shield (8).

9. The reactor construction (1) according to any one of the above claims, wherein the reactor vessel lid assembly (7) is comprising a consolidated unit, such as a mechanically consolidated unit, of
- the reactor vessel lid shield (8),
- the reactor vessel lid (9),
- an upper reactor plenum (10) and
- the reactivity control means (11).

10. The reactor construction (1) according to any one of the above claims, wherein the reactor construction (1) is sealed against the outside environment.

11. The reactor construction (1) according to any one of the above claims, comprising a drain tank (37) for storing molten salt.

12. A power barge comprising at least one reactor construction (1) according to any one of claims 1 to 11 to generate heat evolved in a nuclear fission reaction and at least one steam turbine generator to produce electricity utilising said generated heat.

13. A method of performing a maintenance operation in the reactor compartment (3) according to any one of claims 1 to 11 comprising the steps of:
lifting the reactor vessel lid shield (8) to provide a reactor vessel (6) open from above by engaging with and locking at least one bar (13) to the reactor vessel lid shield (8) and engaging the drive mechanism (14) of the bar (13);
deploying at least one trolley with hoist (28) on at least one cross girder (27) and at least one cross girder drive on the at least one cross girder (27), the at least one trolley with hoist (28), the cross girder drive and the at least one cross girder (27) being comprised in a gantry crane (26), said at least one cross girder (27) extending from a first wall (30) of the reactor compartment (3) to a second wall (31) of the reactor compartment (3) opposite the first wall (30), the at least one cross girder (27) being mounted on gantry crane rails (29) on the first wall (30) and second wall (31), the deployment being performed by
opening a reactor compartment hatch (24), said reactor compartment hatch (24) separating the upper compartment (2) from the reactor compartment (3) and lowering at least one trolley with hoist (28) and the at least one cross girder drive from the upper compartment (2) through the open reactor compartment hatch (24) and connecting the at least one trolley with hoist (28) and the at least one cross girder drive to the at least one cross girder (27);
positioning at least one trolley with hoist (28) above the region subject to maintenance;
performing a maintenance procedure by lowering maintenance equipment in operational proximity of the region subject to maintenance.

14. A method according to claim 13, wherein the MSR (5) comprises at least one graphite moderator structure (38) and the maintenance operation is a replacement of the at least one graphite moderator structure (38) in the MSR (5).

15. A method according to any one of claims 13 or 14, wherein the MSR (5) comprises at least one fuel salt tube (39), preferably wherein the at least one fuel salt tube (39) is made of graphite and the maintenance operation is a replacement of the at least one fuel salt tube (39).

## Patentansprüche

1. Reaktorkonstruktion (1), die eine obere Kammer (2) oberhalb einer Reaktorkammer (3) umfasst, wobei die Reaktorkammer von der oberen Kammer durch einen Strahlungsschirm (4) getrennt ist,
wobei sich ein Salzschmelzenreaktor (MSR) (5) in der Reaktorkammer (3) befindet, wobei der MSR (5) ein Reaktorgefäß (6) mit einer Reaktorgefäßdeckelanordnung (7) umfasst, die Folgendes umfasst:
- eine Reaktorgefäßdeckelabschirmung (8) und einen Reaktorgefäßdeckel (9), wobei sich ein Hubelement (12) in der Reaktorkonstruktion (1) befindet, wobei das Hubelement (12) Folgendes umfasst:
- mindestens eine Stange (13), die durch einen in der oberen Kammer (2) befindlichen Antriebsmechanismus (14) entlang ihrer Längsachse im Wesentlichen vertikal und axial verstellbar ist, und
wobei mindestens ein Durchgangsloch (15) für die mindestens eine Stange (13) in dem Strahlungsschirm (4) bereitgestellt ist und wobei die Reaktorgefäßdeckelabschirmung (8) mindestens eine Aufnahmestruktur (16) aufweist, die dazu ausgelegt ist, mit der mindestens einen Stange (13) in Eingriff zu kommen und mit dieser zu verriegeln.

2. Reaktorkonstruktion (1) nach einem beliebigen Anspruch 1, wobei die Stange (13) eine Gewindestange (17) ist, und ein erstes Ende (18) der Gewindestange (17) in der Lage ist, mit einem Gewinde (19) des Antriebsmechanismus in der oberen Kammer (2) in Eingriff zu kommen, und ein zweites Ende (20) der Gewindestange (17) in der Lage ist, die Gewindestange (17) mit einem Gewinde (21) der Aufnahmestruktur der Reaktorgefäßdeckelabschirmung (8) in Eingriff zu bringen und mit diesem zu verriegeln.

3. Reaktorkonstruktion (1) nach Anspruch 1, wobei das Hubelement (12) aus der Gruppe aus einer Zahnstange und einem Ritzel, einem Heber, einem Stößel/Kolben, einem teleskopischen Linearaktuator, einem starren Kettenaktuators ausgewählt ist.

4. Reaktorkonstruktion (1) nach Anspruch 3, wobei die Stange (13) einen klappbaren Gabelheber umfasst.

5. Reaktorkonstruktion (1) nach einem der obigen Ansprüche, ferner umfassend eine Luftschleuse (22) in der oberen Kammer (2), wobei die Luftschleuse (22) eine obere Kammerluke (23), die die obere Kammer (2) von der Außenumgebung trennt, und mindestens eine Reaktorkammerluke (24), die die obere Kammer (2) von der Reaktorkammer (3) trennt, umfasst.

6. Reaktorkonstruktion (1) nach einem der obigen Ansprüche, ferner umfassend einen Lagerbereich (25) innerhalb der Reaktorkammer (3) für verbrauchten Graphitmoderator, verbrauchte Graphitabschirmung und verbrauchte Brennstoffrohre.

7. Reaktorkonstruktion (1) nach einem der obigen Ansprüche, die ferner in der Reaktorkammer (3) Folgendes umfasst:
einen Portalkran (26), der mindestens einen Querträger (27), einen Querträgerantrieb und einen Wagen mit Hebezeug (28) umfasst, wobei sich der Querträger (27) von einer ersten Wand (30) der Reaktorkammer (3) zu einer zweiten Wand (31) der Reaktorkammer (3) gegenüber der ersten Wand (30) erstreckt, wobei der mindestens eine Querträger (27) auf den Portalkranschienen (29) an der ersten Wand (30) und der zweiten Wand (31) montiert ist.

8. Reaktorkonstruktion (1) nach einem der obigen Ansprüche, wobei die Reaktorgefäßdeckelanordnung (7) ein Reaktivitätssteuermittel (11) umfasst und das Reaktivitätssteuermittel (11) mindestens eine Steuerstange (32) umfasst, die entlang der Längsachse der mindestens einen Steuerstange (32) axial einstellbar ist, und über mindestens eine Antriebsstange (33) mit einem in der oberen Kammer (2) befindlichen Steuerstangenantrieb (34) verbunden ist, wobei der Mechanismus (34) an einem separaten Abschnitt (35 35) des Strahlungsschirms (4) befestigt ist, der mit einer vertikalen Abstandsstruktur (36) an der Oberseite der Reaktorgefäßdeckelabschirmung (8) befestigt ist.

9. Reaktorkonstruktion (1) nach einem der obigen Ansprüche, wobei die Reaktorgefäßdeckelanordnung (7) eine konsolidierte Einheit, wie etwa eine mechanisch konsolidierte Einheit umfasst von
- der Reaktorgefäßdeckelabschirmung (8),
- dem Reaktorgefäßdeckel (9),
- einer oberen Reaktorkammer (10) und
- dem Reaktivitätssteuermittel (11).

10. Reaktorkonstruktion (1) nach einem der obigen Ansprüche, wobei die Reaktorkonstruktion (1) gegen die Außenumgebung abgedichtet ist.

11. Reaktorkonstruktion (1) nach einem der obigen Ansprüche, umfassend einen Abflusstank (37) zum Speichern von Salzschmelze.

12. Energieversorgungsbarge, umfassend mindestens eine Reaktorkonstruktion (1) nach einem der Ansprüche 1 bis 11 zum Erzeugen von Wärme, die in einer Kernspaltungsreaktion entwickelt wird, und mindestens einen Dampfturbinengenerator zum Erzeugen von Elektrizität unter Verwendung der erzeugten Wärme.

13. Verfahren zum Durchführen eines Wartungsvorgangs in der Reaktorkammer (3) nach einem der Ansprüche 1 bis 11, umfassend die folgenden Schritte:
Anheben der Reaktorgefäßdeckelabschirmung (8), um ein von oben offenes Reaktorgefäß (6) bereitzustellen, indem mindestens eine Stange (13) mit der Reaktorgefäßdeckelabschirmung (8) in Eingriff gebracht und daran verriegelt wird und der Antriebsmechanismus (14) der Stange (13) in Eingriff gebracht wird;
Ausbringen mindestens eines Wagens mit Hebezeug (28) an mindestens einem Querträger (27) und mindestens eines Querträgerantriebs an dem mindestens einen Querträger (27), wobei der mindestens eine Wagen mit Hebezeug (28), der Querträgerantrieb und der mindestens eine Querträger (27) in einem Portalkran (26) enthalten sind, wobei sich der mindestens eine Querträger (27) von einer ersten Wand (30) der Reaktorkammer (3) zu einer zweiten Wand (31) der Reaktorkammer (3) gegenüber der ersten Wand (30) erstreckt, wobei der mindestens eine Querträger (27) an Portalkranschienen (29) an der ersten Wand (30) und der zweiten Wand (31) montiert ist, wobei das Einsetzen durch Öffnen einer Reaktorkammerluke (24) durchgeführt wird, wobei die Reaktorkammerluke (24) die obere Kammer (2) von der Reaktorkammer (3) trennt und mindestens einen Wagen mit Hebezeug (28) und den mindestens einen Querträgerantrieb von der oberen Kammer (2) durch die offene Reaktorkammerluke (24) absenkt und den mindestens einen Wagen mit Hebezeug (28) und den mindestens einen Querträgerantrieb mit dem mindestens einen Querträger (27) verbindet;
Positionieren mindestens eines Wagens mit Hebezeug (28) über dem wartungsbedürftigen Bereich;
Durchführen eines Wartungsverfahrens durch Absenken der Wartungsausrüstung in der Betriebsnähe des wartungsbedürftigen Bereichs.

14. Verfahren nach Anspruch 13, wobei der MSR (5) mindestens eine Graphitmoderatorstruktur (38) umfasst und der Wartungsvorgang ein Ersatz der mindestens einen Graphitmoderatorstruktur (38) in dem MSR (5) ist.

15. Verfahren nach einem der Ansprüche 13 oder 14, wobei der MSR (5) mindestens ein Brennstoffsalzrohr (39) umfasst, wobei vorzugsweise das mindestens eine Brennstoffsalzrohr (39) aus Graphit hergestellt ist und der Wartungsvorgang ein Austausch des mindestens einen Brennstoffsalzrohrs (39) ist.

## Revendications

1. Construction de réacteur (1) comprenant un compartiment supérieur (2) au-dessus d'un compartiment de réacteur (3), ledit compartiment de réacteur étant séparé du compartiment supérieur par un écran de protection anti-rayonnement (4),
un réacteur à sel fondu (MSR) (5) étant situé dans le compartiment de réacteur (3), le MSR (5) comprenant une cuve de réacteur (6) avec un ensemble couvercle de cuve de réacteur (7) comprenant :
- un écran de protection de couvercle de cuve de réacteur (8) et un couvercle de cuve de réacteur (9) un élément de levage (12) étant situé dans la construction de réacteur (1), l'élément de levage (12) comprenant :
- au moins une barre (13) qui est sensiblement verticale et réglable axialement le long de son axe longitudinal par un mécanisme d'entraînement (14) situé dans le compartiment supérieur (2), et
au moins un trou traversant (15) pour l'au moins une barre (13) étant prévu dans l'écran de protection anti-rayonnement (4) et l'écran de protection de couvercle de cuve de réacteur (8) ayant au moins une structure de réception (16) configurée pour venir en prise avec l'au moins une barre (13) et se verrouiller sur celle-ci.

2. Construction de réacteur (1) selon la revendication 1, la barre (13) étant une barre filetée (17), et une première extrémité (18) de la barre filetée (17) pouvant venir en prise avec un filetage (19) du mécanisme d'entraînement dans le compartiment supérieur (2) et une seconde extrémité (20) de la barre filetée (17) pouvant venir en prise avec la barre filetée (17) et se verrouiller sur celle-ci, avec un filetage (21) de la structure de réception de l'écran de protection de couvercle de cuve de réacteur (8).

3. Construction de réacteur (1) selon la revendication 1, l'élément de levage (12) étant choisi dans le groupe comprenant une crémaillère, un vérin de levage, un vérin/piston, un actionneur linéaire télescopique et un actionneur à chaîne rigide.

4. Construction de réacteur (1) selon la revendication 3, la barre (13) comprenant un élément élévateur pliable.

5. Construction de réacteur (1) selon l'une quelconque des revendications précédentes, comprenant en outre un sas (22) dans le compartiment supérieur (2), le sas (22) comprenant une trappe de compartiment supérieur (23) séparant le compartiment supérieur (2) de l'environnement extérieur et au moins une trappe de compartiment de réacteur (24) séparant le compartiment supérieur (2) du compartiment de réacteur (3).

6. Construction de réacteur (1) selon l'une quelconque des revendications précédentes, comprenant en outre une région de stockage (25) à l'intérieur du compartiment de réacteur (3) pour modérateur de graphite usagé, blindage de graphite usagé et tubes de combustible usagé.

7. Construction de réacteur (1) selon l'une quelconque des revendications précédentes comprenant en outre, dans le compartiment de réacteur (3) :
une grue à portique (26) comprenant au moins une poutre transversale (27), un entraînement de poutre transversale et un chariot avec palan (28), ladite poutre transversale (27) s'étendant d'une première paroi (30) du compartiment de réacteur (3) à une seconde paroi (31) du compartiment de réacteur (3) opposée à la première paroi (30), l'au moins une poutre transversale (27) étant montée sur des rails de grue à portique (29) sur la première paroi (30) et seconde paroi (31).

8. Construction de réacteur (1) selon l'une quelconque des revendications précédentes, l'ensemble de couvercle de cuve de réacteur (7) comprenant un moyen de commande de réactivité (11), et le moyen de commande de réactivité (11) comprenant au moins une tige de commande (32) réglable axialement le long de l'axe longitudinal de l'au moins une tige de commande (32), et relié par au moins une tige d'entraînement (33) à un mécanisme d'entraînement de tige de commande (34) situé dans le compartiment supérieur (2), le mécanisme (34) étant fixé à une section séparée (35) de l'écran de protection anti-rayonnement (4), ladite section (35) étant fixée par une structure d'espacement verticale (36) sur le côté supérieur de l'écran de protection de couvercle de cuve de réacteur (8).

9. Construction de réacteur (1) selon l'une quelconque des revendications précédentes, l'ensemble couvercle de cuve de réacteur (7) comprenant une unité consolidée, telle qu'une unité consolidée mécaniquement
- l'écran de protection de couvercle de cuve de réacteur (8),
- le couvercle de cuve de réacteur (9),
- un plénum supérieur de réacteur (10) et
- le moyen de contrôle de réactivité (11).

10. Construction de réacteur (1) selon l'une quelconque des revendications précédentes, la construction de réacteur (1) étant scellée vis-à-vis de l'environnement extérieur.

11. Construction de réacteur (1) selon l'une quelconque des revendications précédentes, comprenant un réservoir de vidange (37) pour stocker du sel fondu.

12. Navire-centrale comprenant au moins une construction de réacteur (1) selon l'une quelconque des revendications 1 à 11 pour générer de la chaleur dégagée dans une réaction de fission nucléaire et au moins un générateur de turbine à vapeur pour produire de l'électricité en utilisant ladite chaleur générée.

13. Procédé de réalisation d'une opération de maintenance dans le compartiment de réacteur (3) selon l'une quelconque des revendications 1 à 11 comprenant les étapes de :
soulèvement de l'écran de protection de couvercle de cuve de réacteur (8) pour ouvrir une cuve de réacteur (6) par le haut en engageant avec au moins une barre (13) et se verrouillant sur celle-ci sur l'écran de protection de couvercle de cuve de réacteur (8) et en engageant le mécanisme d'entraînement (14) de la barre (13) ;
déploiement d'au moins un chariot avec palan (28) sur au moins une poutre transversale (27) et au moins un entraînement de poutre transversale sur l'au moins une poutre transversale (27), l'au moins un chariot avec palan (28), l'entraînement de poutre transversale et l'au moins une poutre transversale (27) étant compris dans une grue à portique (26), ladite au moins une poutre transversale (27) s'étendant d'une première paroi (30) du compartiment de réacteur (3) à une seconde paroi (31) du compartiment de réacteur (3) opposée à la première paroi (30), l'au moins une poutre transversale (27) étant montée sur des rails de grue à portique (29) sur les première (30) et seconde paroi (31), le déploiement étant effectué par ouverture d'une trappe (24) du compartiment de réacteur, ladite trappe de compartiment de réacteur (24) sépare le compartiment supérieur (2) du compartiment de réacteur (3) et abaisse au moins un chariot avec palan (28) et l'au moins un entraînement de poutre transversale du compartiment supérieur (2) à travers la trappe de compartiment de réacteur ouverte (24) et relie l'au moins un chariot avec palan (28) et l'au moins un entraînement de poutre transversale à l'au moins une poutre transversale (27) ;
le positionnement d'au moins un chariot avec palan (28) au-dessus de la zone soumise maintenance ;
la réalisation d'une procédure de maintenance en abaissant l'équipement de maintenance à proximité opérationnelle de la région faisant l'objet de la maintenance.

14. Procédé selon la revendication 13, le MSR (5) comprenant au moins une structure de modérateur de graphite (38) et l'opération de maintenance étant un remplacement de l'au moins une structure de modérateur de graphite (38) dans le MSR (5).

15. Procédé selon l'une quelconque des revendications 13 ou 14, le MSR (5) comprenant au moins un tube de sel combustible (39), de préférence l'au moins un tube de sel combustible (39) étant fait de graphite et l'opération de maintenance étant un remplacement de l'au moins un tube de sel combustible (39).
